# FASCICULE DE BREVET EUROPEEN

(11) **EP 2 299 129 B1**
(45) Date de publication et mention de la délivrance du brevet: **31.10.2012**
(21) Numéro de dépôt: 10290489.3
(22) Date de dépôt: 14.09.2010
(51) Int. Cl.: F16C 19/18, F16C 33/58, F16C 33/78, F16C 33/80

(54) **Palier à roulement à étanchéité ameliorée**
Wälzlager mit verbesserter Abdichtung
Antifriction bearing with improved seal

(30) Priorité: 15.09.2009 FR 0904400
(43) Date de publication de la demande: 23.03.2011
(73) Titulaire: NTN-SNR Roulements, 74000 Annecy (FR)
(72) Inventeur: Metral-Boffod, Michel, 74320 Sevrier (FR); Ruhland, Siegfried, 74540 Saint Sylvestre (FR)
(74) Mandataire: Novagraaf Technologies

(56) Documents cités:
- DE-T5-112007 002 015
- JP-A- 2005 147 298
- US-A- 4 789 252
- E.Fritz, W.Haas, H.K. Müller: "Berührungsfreie Spindelabdichtung im Werkzeugmaschinenbau" 1 novembre 1991 (1991-11-01), Uni Stuttgart , Stuttgart , XP002569132 ISBN: 3921920396 * page 14 - page 19 * * figures 7.3W,X,Y * * figures 7.12,7.4 *

## Description

### DOMAINE TECHNIQUE DE L'INVENTION

L'invention se rapporte au domaine des paliers à roulement, notamment mais non exclusivement dans des applications du domaine des véhicules automobiles. L'invention trouve particulièrement des applications pour la mise en rotation d'une roue de véhicule automobile par rapport au châssis du véhicule. L'invention se rapporte plus particulièrement à des dispositions visant à assurer une meilleure étanchéité entre pièce tournante et pièce fixe d'un tel palier.

### ETAT DE LA TECHNIQUE ANTERIEURE

Le document JP 2005-147298 A divulgue un palier à roulement avec toutes les caractéristiques techniques du préambule de la revendication 1.

Dans le document FR 2 827 351 est divulgué un palier à roulement pour des corps roulants coniques comprenant notamment un joint d'étanchéité dynamique associé à l'une des bagues et une armature annulaire associée à l'autre bague du roulement, contre laquelle le joint vient frotter lors de la rotation relative des bagues. L'armature permet ici de protéger le joint et de limiter son usure. De plus l'ensemble reste de forme relativement simple donc facilement réalisable.

Cependant ce type de roulement risque une usure prématurée notamment de la partie de l'armature faisant office de portée de joint et des lèvres du joint situées juste en face d'une projection d'eau et/ou de boue venant de l'extérieur du roulement, dirigée radialement à la fois contre la bague extérieure et une partie de la bague intérieure. En effet dans cet art antérieur la portée axiale extérieure de l'armature du joint ferme une chicane formée entre les deux bagues du joint et se trouve ainsi directement exposée à ces projections de liquide.

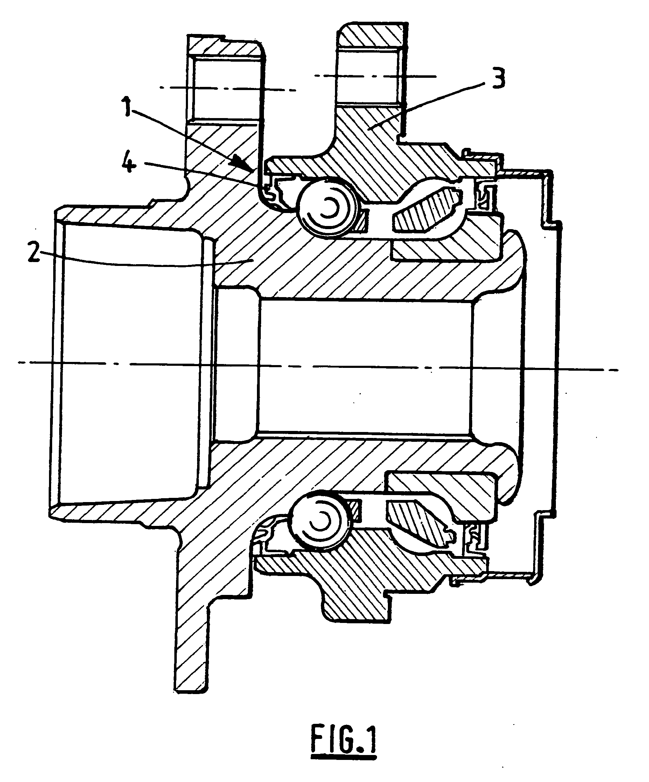

On trouve la même problématique dans un assemblage à roulement tel que représenté sur la figure 1 où le moyeu 2 forme avec la bague extérieure 3 du roulement une chicane 1. Ce passage étroit entre le moyeu 2 et la bague extérieure 3 ne protège pas suffisamment le joint à lèvres 4 placé entre les deux chemins de roulement à proximité de cette chicane 1. On constate ici une usure prématurée dudit joint 4 qui conduit à une pollution du roulement, d'où un écaillage des chemins de roulement et finalement un bruit.

Une façon de résoudre ce problème peut être trouvée dans le document JP 2007-002884 où le joint ne comporte pas de portée axiale et est disposé entièrement à l'intérieur de l'espace annulaire entre le moyeu et la bague extérieure ; de ce fait le joint n'est pas directement exposé aux projections de liquide et son usure est moindre. Cependant le passage très étroit ménagé entre l'extrémité de la bague extérieure et le moyeu permet à l'eau de ruissellement de pénétrer directement dans l'espace annulaire entre ces deux éléments, et de solliciter la face radiale extérieure du joint, malgré la forme spécifique de celui-ci.

Une autre façon de résoudre ce problème consiste à prévoir une chicane dont l'ouverture n'est pas dans l'axe de la projection, mais perpendiculaire à cet axe.

Cette solution résout une partie du problème car le liquide projeté n'impactant pas directement le joint et/ou son armature, l'usure et la dégradation est diminuée vis-à-vis des solutions exposées précédemment.

### EXPOSE DE L'INVENTION

L'invention vise à remédier aux inconvénients de l'état de la technique et notamment au problème de défaillance prématurée du joint, due notamment à l'usure du joint par une projection directe d'eau, et à une pollution de la chambre extérieure du joint.

Pour ce faire est proposé selon un premier aspect de l'invention un palier à roulement du type comprenant une bague extérieure et une pièce intérieure dotées respectivement d'au moins un chemin de roulement extérieur et au moins un chemin de roulement intérieur, les chemins de roulement intérieur et extérieur étant situés radialement en regard l'un de l'autre pour loger des corps roulants, la pièce intérieure étant pourvue d'une paroi d'étanchéité tournée axialement vers les chemins de roulement et s'étendant radialement vers l'extérieur, la bague extérieure étant pourvue d'une paroi de recouvrement s'étendant axialement vers la paroi d'étanchéité et tournée radialement vers l'intérieur de manière à former avec la paroi d'étanchéité une chambre d'étanchéité, la chambre d'étanchéité étant ouverte intérieurement sur les chemins de roulement et présentant une ouverture annulaire extérieure constituant une perte de charge, la paroi d'étanchéité se prolonge radialement vers l'extérieur par un rebord annulaire de la pièce intérieure, le rebord annulaire étant tourné radialement vers l'extérieur, la paroi de recouvrement présentant un recouvrement axial avec le rebord annulaire extérieur pour délimiter radialement ladite ouverture annulaire extérieure, **caractérisé en ce que** la pièce intérieure présentant en outre une gouttière annulaire tournée radialement vers l'extérieur, le rebord annulaire extérieur étant situé entre la gouttière annulaire de la pièce intérieure et la paroi d'étanchéité. On crée ainsi un ensemble ayant de très bonnes propriétés d'étanchéité, sans ajout de pièces supplémentaires qui viendraient compliquer le système. La fiabilité et la robustesse du palier à roulement sont avantageusement renforcées.

Par ailleurs, le diamètre intérieur de la gouttière est inférieur au diamètre intérieur du rebord annulaire extérieur de la pièce intérieure. Cette caractéristique, de réalisation simple avec les machines actuelles, améliore sensiblement l'étanchéité au niveau et à proximité de l'ouverture annulaire.

Plus précisément, le rebord annulaire comprend une première et une deuxième parois incurvées qui se rejoignent selon une ligne de rebroussement, la première paroi incurvée est disposée entre la gouttière et la deuxième paroi incurvée, et la première paroi présente une concavité tournée vers l'extérieur et un rayon de courbure inférieur au rayon de courbure de la deuxième paroi dont la concavité est tournée vers l'intérieur du palier ( en coupe axiale ).

Avantageusement, la chambre d'étanchéité loge un joint d'étanchéité qui peut être fixé à la bague extérieure et comporter au moins une lèvre en contact avec la paroi d'étanchéité.

Selon un mode préféré de réalisation de l'invention, le dispositif d'étanchéité est un joint de type multi lèvres.

Par ailleurs, le dispositif d'étanchéité peut comprendre une armature annulaire.

Avantageusement, ladite paroi d'étanchéité présente au niveau du contact axial avec le dispositif d'étanchéité, un état de surface rectifié. On constate que lorsque la lèvre d'un joint vient en contact directement sur la pièce intérieure, l'étanchéité dépend fortement de l'état de surface de la zone de contact. Or, le choix du matériau formant la pièce intérieure est limité par les contraintes d'utilisation du palier et ne peut donc pas être rendu optimal en lui-même. Un état de surface spécifique (ici rectifié) s'avère donc intéressant pour améliorer l'étanchéité.

Selon une particularité intéressante de l'invention, la paroi de recouvrement de la bague extérieure constitue une face d'une extension axiale de ladite bague, l'extension présentant en outre une gouttière tournée radialement vers l'extérieur, à l'extérieur de la chambre d'étanchéité.

De façon intéressante, il a été trouvé qu'un recouvrement axial compris entre 0,05 mm et 1 mm doit être privilégié.

En outre, le rebord de la pièce intérieure comporte au moins une portion cylindrique tournée radialement vers l'extérieur et faisant face à une portion cylindrique de la paroi de recouvrement.

Selon un mode de réalisation, la pièce intérieure est une pièce tournante, la bague extérieure étant fixe.

Selon un mode de réalisation intéressant, le moyeu constitue la pièce intérieure du palier à roulement.

Par ailleurs, l'invention porte sur une pièce intérieure pour un palier à roulement, la pièce intérieure étant dotée d'un chemin de roulement pour loger des corps roulants et étant pourvue d'une paroi d'étanchéité tournée axialement vers les chemins de roulement dudit palier, et s'étendant radialement vers l'extérieur. La paroi d'étanchéité se prolonge radialement vers l'extérieur par un rebord annulaire tourné radialement vers l'extérieur et la pièce intérieure présente en outre une gouttière annulaire tournée radialement vers l'extérieur, le rebord annulaire étant situé axialement entre la gouttière annulaire et la paroi d'étanchéité. La paroi d'étanchéité de la pièce intérieure présente préférentiellement sur une portion annulaire un état de surface rectifié. Et elle peut présenter une portion annulaire plane ; tandis que le rebord annulaire peut présenter une portion cylindrique.

### BREVE DESCRIPTION DES FIGURES

D'autres caractéristiques, détails et avantages de l'invention ressortiront à la lecture de la description qui suit, en référence aux figures annexées, qui illustrent :
- la figure 2, une vue schématique en coupe du palier à roulement selon un premier mode de réalisation de l'invention;
- la figure 2A, une coupe détaillée du rebord annulaire;
- la figure 3, une vue schématique en coupe d'un deuxième mode de réalisation de l'invention ;
- la figure 4, une vue schématique en coupe d'un troisième mode de réalisation de l'invention; et
- la figure 5, une vue schématique en coupe d'un quatrième mode de réalisation de l'invention.

Pour plus de clarté, les éléments identiques ou similaires sont repérés par des signes de référence identiques sur l'ensemble des figures.

### DESCRIPTION DETAILLEE DE MODES DE REALISATION

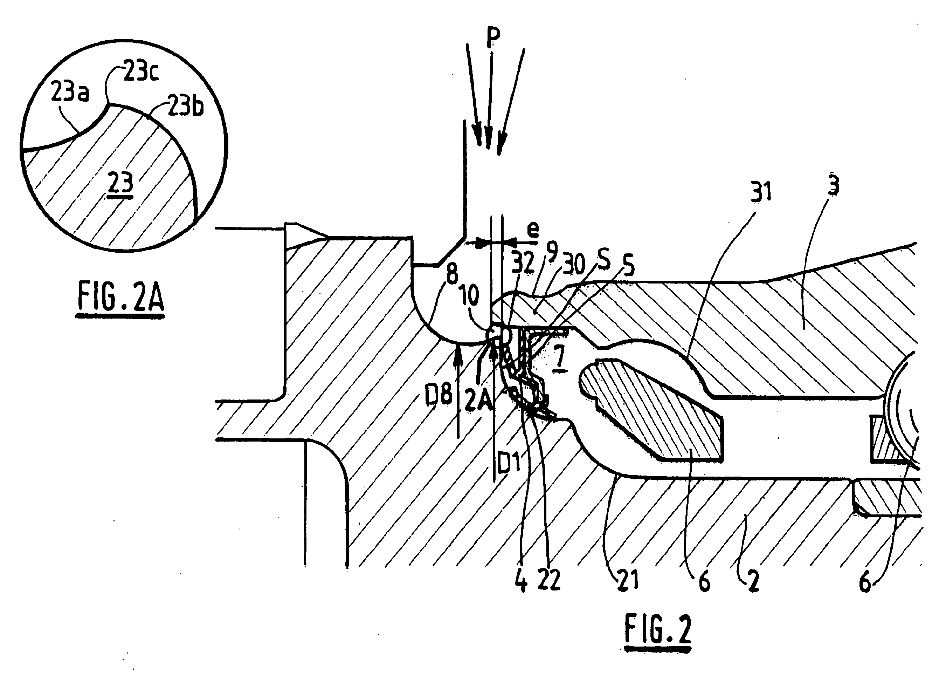

Sur la figure 2, on peut voir de façon schématique une zone d'un palier à roulement selon un premier mode de réalisation de l'invention. Le palier comprend une bague extérieure fixe 3 ainsi qu'une bague intérieure (ou élément équivalent) tournante 2. Par élément équivalent, on entend par exemple une zone du moyeu lui-même et plus généralement toute pièce intérieure pleine ou creuse. L'homme du métier choisira l'une ou l'autre des options en fonction de l'application visée, des contraintes techniques, ou encore des contraintes économiques.

Pour assurer la rotation relative autour de l'axe principal de rotation (non représenté) de la bague intérieure 2 vis-à-vis de la bague extérieure 3, des corps roulants 6 sont prévus entre lesdites bagues. A cet effet, chaque bague est pourvue d'un chemin de roulement 21, 31 pour loger des corps roulants 6. Les chemins de roulement 21,31 sont situés radialement en regard l'un de l'autre.

La description réalisée en relation avec ce mode de réalisation est directement transposable à un palier dans lequel la bague intérieure est fixe et la bague extérieure tournante. De même on peut prévoir une ou deux rangées de corps roulants 6 associées aux bagues 2,3.

Dans la description, les termes « extérieur » et « intérieur » sont définis par rapport à une distance respectivement éloignée et à proximité de l'axe principal de rotation du palier ; « axial » signifie selon ledit axe et « radial » est défini par rapport à un plan perpendiculaire audit axe de rotation.

Le palier est plus particulièrement destiné à être utilisé pour la mise en rotation d'une roue de véhicule automobile par rapport au châssis dudit véhicule. Ainsi, la bague intérieure ou le moyeu 2 sont rotatifs et la bague extérieure fixe 3 est associée au châssis du véhicule.

La figure 2 montre en coupe le palier et son environnement immédiat.

Plus précisément, la bague intérieure 2 est pourvue d'une paroi d'étanchéité 22 tournée axialement vers les chemins de roulement 21,31 et s'étendant radialement vers l'extérieur. La bague extérieure 3 comprend une extension radiale 30 et est pourvue intérieurement d'une paroi de recouvrement 32. Cette paroi de recouvrement 32 s'étend axialement vers la paroi d'étanchéité 22 et est tournée radialement vers l'intérieur de manière à former avec la paroi d'étanchéité 22 une chambre d'étanchéité 7. La chambre d'étanchéité 7 est ouverte intérieurement sur les chemins de roulement 21,22. Elle est ouverte extérieurement par une ouverture annulaire ou sensiblement annulaire 10 constituant une perte de charge. On entend ici par perte de charge un rétrécissement de l'ouverture qui fait au moins partiellement obstacle au passage d'un liquide.

La disposition de l'ouverture annulaire 10 de la chambre 7 évite que des projections d'eau ou de boue orientées radialement (selon les flèches P) viennent directement impacter l'ouverture, si celle-ci est orientée perpendiculairement à l'axe de rotation.

Avantageusement, la paroi d'étanchéité 22 se prolonge radialement vers l'extérieur par un rebord annulaire 23 de la bague intérieure 2.

La figure 2A montre de façon plus précise une forme préférée du rebord annulaire 23 ; celui-ci comporte une première et une deuxième parois incurvées 23a et 23b. La première paroi 23a présente dans un plan de coupe axial une concavité tournée vers l'extérieur du palier et un petit rayon de courbure, de l'ordre de quelques millimètres par exemple. La première paroi 23a est disposée entre la gouttière 8 et la deuxième paroi incurvée 23b. La deuxième paroi 23b présente en coupe axiale une concavité tournée vers l'intérieur du palier, et un rayon de courbure plus grand que celui de la première paroi 23a. Ces parois se rejoignent pour former une arête vive 23c destinée à réduire la tension superficielle du liquide. En particulier le fait que la paroi 23b présente un certain rayon de courbure permet de diriger le liquide vers l'arête vive 23c qui éjectera ainsi le liquide d'autant plus facilement.

Toute autre façon de créer à ce niveau une tension superficielle aussi faible que possible pourra être prévue sans sortir du cadre de l'invention.

Par ailleurs une gouttière annulaire 8 est formée sur la surface extérieure de la bague intérieure 2 avec une concavité tournée vers l'extérieur du palier et elle est prévue à proximité de l'entrée 10 de la chicane 1. « A proximité » signifie que la courbure de la gouttière 8 se termine au niveau du rebord annulaire 23, plus précisément elle est continue avec la paroi 23b.

Une telle gouttière 8 permet une économie de matière non négligeable.

Par ailleurs un dispositif d'étanchéité est prévu dans la chambre d'étanchéité 7 entre les deux bagues 2,3. Le dispositif d'étanchéité comprend ici un joint d'étanchéité dynamique de type multi lèvres 4 auquel est associée une armature 5. Ce dispositif est un moyen mécanique connu en lui-même qui permet ici d'éviter la pollution de l'intérieur du palier par des contaminants extérieurs, et qui évite par ailleurs la projection de lubrifiant en dehors du palier.

Selon la figure 2, le dispositif d'étanchéité 4 est fixé à la bague extérieure 3 et il présente des portées radiales et axiales avec la bague intérieure 2. Ainsi, le joint d'étanchéité 4 comporte au moins une lèvre en contact avec la paroi d'étanchéité 22 de la bague intérieure 2. Il est renforcé et supporté intérieurement par une armature annulaire 5 qui présente notamment une paroi axiale extérieure d'appui contre la bague extérieure 3. L'armature 5 peut être réalisée par emboutissage. Et elle peut être constituée en inox par exemple afin de résister à l'oxydation engendrée par la projection d'eau et de boue vers l'intérieur du palier.

Conformément à l'invention, l'extension axiale 30 de la bague extérieure 3 est prévue et agencée de telle sorte qu'il existe un recouvrement axial (e) entre cette extension 30 et le profil de la paroi extérieure 22 de la bague intérieure 2 au niveau de l'ouverture (ou entrée) 10. Le recouvrement constitue une perte de charge réalisée dès l'entrée de la chicane 1. Conformément à une application réalisée, le recouvrement (e) est compris entre 0,05 mm et 1 mm.

Au niveau de l'ouverture annulaire 10, la courbure de la bague intérieure 2 s'inverse pour former l'arête vive 23c ou point de rebroussement. Ainsi le diamètre intérieur D8 de la gouttière 8 est strictement inférieur au diamètre intérieur D1 du rebord annulaire 23 de la bague intérieure 2.

Par ailleurs, il y a contact axial entre la lèvre la plus externe du joint d'étanchéité 4 et la paroi annulaire de la bague intérieure 2. On traitera cette surface de contact en la rectifiant par exemple, afin de la rendre la moins rugueuse possible, diminuant ainsi au maximum les forces de friction entre les deux surfaces.

Concernant le joint d'étanchéité dynamique, un joint multi lèvres 4 est avantageusement choisi, avec à la fois une portée axiale (contre la surface rectifiée) et au moins une portée radiale.

En outre l'extension 30 de la bague 3 peut présenter une gouttière 9 sur sa surface extérieure. La gouttière 9 est tournée radialement vers l'extérieur, à l'extérieur de la chambre d'étanchéité 7. En l'absence de rotation, la gouttière 9 a un effet similaire à la gouttière 8, puisque les deux gouttières contribuent au guidage des eaux ruisselantes hors de la zone de l'ouverture annulaire 10. Les deux gouttières combinent leurs effets et sont à même d'écouler les projections P ou les ruissellements venant de différentes directions. En rotation, la gouttière 8 a en outre un effet centrifuge sur les projection incidentes.

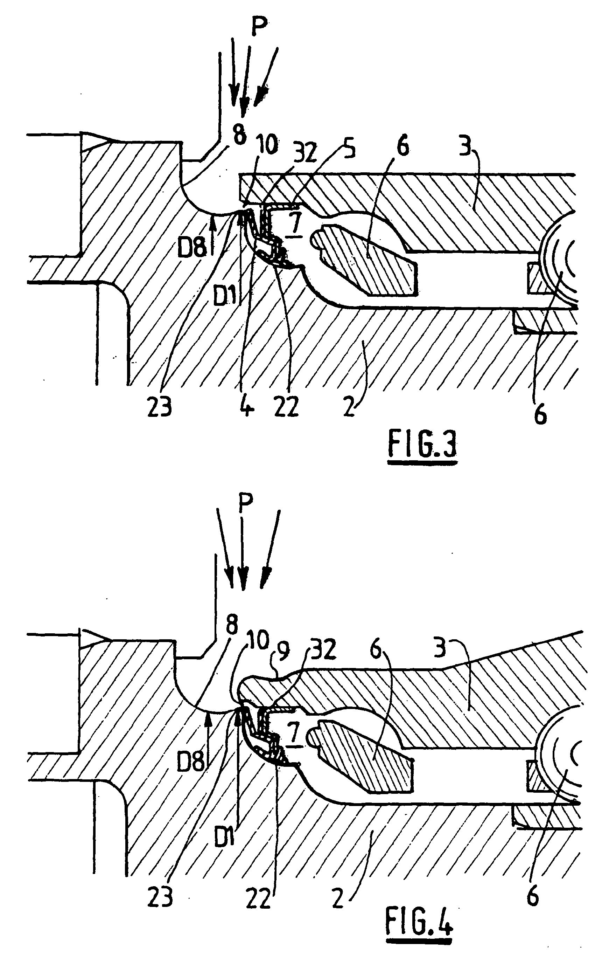

La présence de la gouttière 9 n'est pas obligatoire et la figure 3 illustre un mode de réalisation sans gouttière 9.

La figure 4 illustre un mode de réalisation qui diffère de celui de la figure 2 par la forme de l'ouverture annulaire 10 au niveau de la paroi intérieure de la bague extérieure 3. En effet, à proximité de l'ouverture 10, le diamètre intérieur de la paroi 32 n'est pas constant puisqu'il existe un épaulement. Plus précisément, un diamètre plus grand est prévu à proximité immédiate de l'ouverture 10 tandis qu'un diamètre plus faible est réalisé plus à l'intérieur de la chambre d'étanchéité 7. On forme ainsi une chicane ayant une perte de charge plus importante que dans les modes de réalisation précédents.

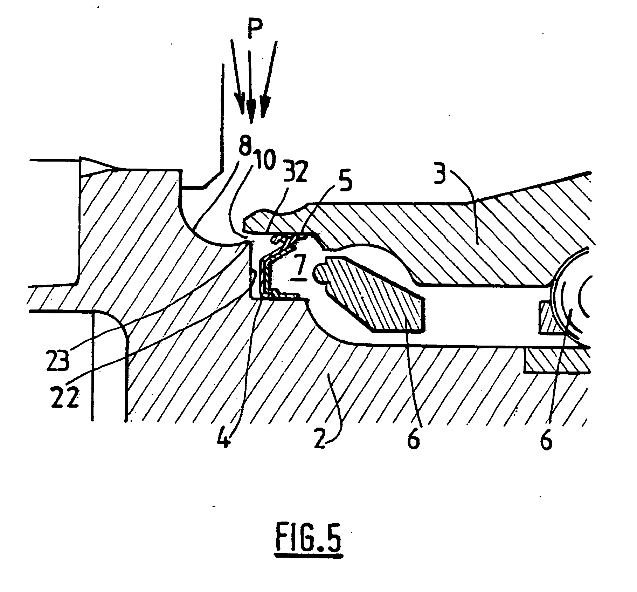

La figure 5 concerne un mode de réalisation où le dispositif d'étanchéité 4,5 ne présente pas de portée axiale, mais uniquement des portées radiales sur chacune des bagues 2, 3. Cette caractéristique permet de limiter les surfaces de frottement et donc le couple de frottement.

Les avantages obtenus par l'invention sont multiples, notamment au niveau de l'étanchéité qui est largement renforcée. La protection du joint est en outre améliorée de sorte que l'on peut utiliser l'invention dans des environnements difficiles, hostiles. Par ailleurs l'usure du dispositif d'étanchéité est moindre, ce qui accroît la durée de vie du palier selon l'invention.

En outre, à performance d'étanchéité égale, la présente invention permet de réduire le nombre de lèvres du joint et ainsi le couple de frottement.

Les machines actuelles permettent d'usiner aisément les bagues ayant les formes définies selon l'invention, avec des tolérances minimales. De ce fait, le coût et la faisabilité rendent l'invention particulièrement attractive.

## Revendications

1. Palier à roulement du type comprenant une pièce intérieure (2) et une bague extérieure (3) dotées respectivement d'au moins un chemin de roulement intérieur (21) et au moins un chemin de roulement extérieur (31), les chemins de roulement intérieur et extérieur étant situés radialement en regard l'un de l'autre pour loger des corps roulants (6), la pièce intérieure (2) étant pourvue d'une paroi d'étanchéité (22) tournée axialement vers les chemins de roulement et s'étendant radialement vers l'extérieur, la bague extérieure (3) étant pourvue d'une paroi de recouvrement (32) s'étendant axialement vers la paroi d'étanchéité (22) et tournée radialement vers l'intérieur de manière à former avec la paroi d'étanchéité (22) une chambre d'étanchéité (7), la chambre d'étanchéité étant ouverte intérieurement sur les chemins de roulement (21,31) et présentant une ouverture annulaire extérieure (10) constituant une perte de charge, la paroi d'étanchéité (22) se prolonge radialement vers l'extérieur par un rebord annulaire (23) de la pièce intérieure (2), le rebord annulaire étant tourné radialement vers l'extérieur, la paroi de recouvrement (32) présentant un recouvrement axial (e) avec le rebord annulaire extérieur (23 pour délimiter radialement ladite ouverture annulaire extérieure (10), **caractérisé en ce que** la pièce intérieure (2) présentant en outre une gouttière annulaire (8) tournée radialement vers l'extérieur, le rebord annulaire extérieur (23) étant situé entre la gouttière annulaire (8) de la pièce intérieure (2) et la paroi d'étanchéité (22).

2. Palier selon la revendication 1 **caractérisé en ce que** le diamètre intérieur (D8) de ladite gouttière (8) est inférieur au diamètre intérieur (D1) du rebord annulaire extérieur (23) de la pièce intérieure (2).

3. Palier selon l'une quelconque des revendications précédentes **caractérisé en ce que** le rebord annulaire (23) comprend une première (23a) et une deuxième (23b) parois incurvées qui se rejoignent selon une ligne de rebroussement (23c), **en ce que** la première paroi incurvée (23a) est disposée entre la gouttière (8) et la deuxième paroi incurvée (23b), et **en ce que** la première paroi (23a) présente une concavité tournée vers l'extérieur et un rayon de courbure inférieur au rayon de courbure de la deuxième paroi (23b) dont la concavité est tournée vers l'intérieur dudit palier.

4. Palier selon l'une quelconque des revendications précédentes **caractérisé en ce que** la chambre d'étanchéité loge un joint d'étanchéité (4).

5. Palier selon la revendication 4, **caractérisé en ce que** le joint d'étanchéité (4) est fixé à la bague extérieure (3) et comporte au moins une lèvre en contact avec la paroi d'étanchéité (22).

6. Palier selon l'une quelconque des revendications 4 ou 5, **caractérisé en ce que** le joint d'étanchéité comprend un joint d'étanchéité dynamique de type multi-lèvres (4).

7. Palier selon l'une quelconque des revendications 4 à 6, **caractérisé en ce que** le joint d'étanchéité comprend une armature annulaire (5).

8. Palier selon l'une quelconque des revendications 4 à 7 **caractérisé en ce que** ladite paroi d'étanchéité (22) présente au niveau du contact axial avec le dispositif d'étanchéité (4,5), un état de surface rectifié.

9. Palier selon l'une quelconque des revendications précédentes **caractérisé en ce que** la paroi de recouvrement (32) constitue une face d'une extension axiale (30) de la bague extérieure (3), l'extension présentant en outre une gouttière (9) tournée radialement vers l'extérieur, à l'extérieur de la chambre d'étanchéité(7).

10. Palier selon l'une quelconque des revendications précédentes **caractérisé en ce que** le recouvrement axial est compris entre 0,05 et 1 mm.

11. Palier selon l'une quelconque des revendications précédentes **caractérisé en ce que** le rebord (23) de la pièce intérieure (2) comporte au moins une portion cylindrique tournée radialement vers l'extérieur et faisant face à une portion cylindrique de la paroi de recouvrement (32) pour former l'ouverture annulaire extérieure (10).

12. Palier selon la revendication 11, **caractérisé en ce que** la distance radiale entre la portion cylindrique du rebord et la portion cylindrique de la paroi de recouvrement (32) est comprise entre 0,3 et 1 mm.

13. Palier selon l'une quelconque des revendications précédentes, **caractérisé en ce que** la pièce intérieure (2) est une pièce tournante, la bague extérieure (3) étant fixe.

14. Ensemble à roulement comprenant un moyeu et un palier à roulement selon l'une quelconque des revendications précédentes **caractérisé en ce que** le moyeu constitue la pièce intérieure (2) du palier à roulement.

15. Pièce intérieure pour un palier à roulement selon l'une quelconque des revendications 1 à 13, la pièce intérieure étant dotée d'un chemin de roulement (21) pour loger des corps roulants (6), la pièce intérieure étant pourvue d'une paroi d'étanchéité (22) tournée axialement vers les chemins de roulement (21,31) et s'étendant radialement vers l'extérieur, la paroi d'étanchéité (22) se prolonge radialement vers l'extérieur par un rebord annulaire (23) tourné radialement vers l'extérieur, **caractérisé en ce que** la pièce intérieure (2) présentant en outre une gouttière annulaire (8) tournée radialement vers l'extérieur, le rebord annulaire (23) étant situé axialement entre la gouttière annulaire (8) et la paroi d'étanchéité (22).

16. Pièce intérieure selon la revendication 15, **caractérisée en ce que** la paroi d'étanchéité (22) présente sur une portion annulaire au moins un état de surface rectifié.

17. Pièce intérieure selon la revendication 15 ou la revendication 16, **caractérisée en ce que** la paroi d'étanchéité (22) présente une portion annulaire plane.

18. Pièce intérieure selon l'une quelconque des revendications 15 à 17 **caractérisée en ce que** le rebord annulaire (23) présente une portion cylindrique.

## Claims

1. Roller bearing of the type comprising an internal piece (2) and an outer race (3) provided respectively with at least one inner raceway (21) and at least one outer raceway (31), the said inner and outer raceways being situated radially in opposition to one another in order to house rolling bodies (6), the internal piece (2) being provided with a sealing wall (22) turned axially towards the raceways and extending radially outwards, the outer race (3) being provided with a covering wall (32) extending axially towards the sealing wall (22) and turned radially towards the inside so as to form, with the sealing wall (22), a sealing chamber (7), the sealing chamber being open internally onto the raceways (21, 31) and having an external annular opening (10) forming a pressure drop, the sealing wall (22) extending radially outwards by means of an annular rim (23) on the internal piece (2), the annular rim being turned radially outwards, the covering wall (32) having an axial overlap (e) with the external annular rim (23) in order to delimit radially said external annular opening (10), **characterised in that** the internal piece (2) also has an annular channel (8) turned radially outwards, the external annular rim (23) being situated between the annular channel (8) of the internal piece (2) and the sealing wall (22).

2. Bearing according to claim 1, **characterised in that** the inside diameter (D8) of said channel (8) is less than the inside diameter (D1) of the external annual rim (23) of the internal piece (2).

3. Bearing according to any one of the preceding claims, **characterised in that** the annular rim (23) comprises a first (23a) and a second (23b) curved walls that join on a retrogression line (23c), **in that** the first curved wall (23a) is placed between the channel (8) and the second curved wall (23b), and **in that** the first wall (23a) has a concavity turned outwards and a radius of curvature less than the radius of curvature of the second wall (23b) the concavity of which is turned towards the inside of said bearing.

4. Bearing according to any one of the preceding claims, **characterised in that** the sealing chamber houses a gasket (4).

5. Bearing according to claim 4, **characterised in that** the gasket (4) is fixed to the outer race (3) and comprises at least one lip in contact with the sealing wall (22).

6. Bearing according to either one of claims 4 or 5, **characterised in that** the gasket comprises a dynamic gasket of the multi-lip type (4).

7. Bearing according to any one of claims 4 to 6, **characterised in that** the gasket comprises an annular frame (5).

8. Bearing according to any one of claims 4 to 7, **characterised in that** said gasket (22) has, at the axial contact with the sealing device (4, 5), a rectified surface finish.

9. Bearing according to any one of the preceding claims, **characterised in that** the covering wall (32) constitutes a face of an axial extension (30) of the outer race (3), the extension also having a channel (9) turned radially outwards, to the outside of the sealing chamber (7).

10. Bearing according to any one of the preceding claims, **characterised in that** the axial overlap is between 0.05 and 1 mm.

11. Bearing according to any one of the preceding claims, **characterised in that** the rim (23) of the internal piece (2) comprises at least one cylindrical portion turned radially outwards and facing a cylindrical portion of the covering wall (32) in order to form the external annular opening (10).

12. Bearing according to claim 11, **characterised in that** the radial distance between the cylindrical portion of the rim and the cylindrical portion of the covering wall (32) is between 0.3 and 1 mm.

13. Bearing according to any one of the preceding claims, **characterised in that** the internal piece (2) is a rotating piece, the outer race (3) being fixed.

14. Bearing assembly comprising a hub and a roller bearing according to any one of the preceding claims, **characterised in that** the hub constitutes the internal piece (2) of the roller bearing.

15. Internal piece for a roller bearing according to any one of claims 1 to 13, the internal piece being provided with a raceway (21) for housing rolling bodies (6), the internal piece being provided with a sealing wall (22) turned axially towards the raceways (21, 31) and extending radially outwards, the sealing wall (22) extending radially outwards by means of an annular rim (23) turned radially outwards, **characterised in that** the internal piece (2) also has an annular channel (8) turned radially outwards, the annular rim (23) being situated axially between the annular channel (8) and the sealing wall (22).

16. Internal piece according to claim 15, **characterised in that** the sealing wall (22) has at least one rectified surface finish on an annular portion.

17. Internal piece according to claim 15 or claim 16, **characterised in that** the sealing wall (22) has a flat annular portion.

18. Internal piece according to any one of claims 15 to 17, **characterised in that** the annular rim (23) has a cylindrical portion.

## Patentansprüche

1. Rollenlager des Typs umfassend einen inneren Teil (2) und einen äußeren Ring (3) und jeweils versehen mit mindestens einem inneren Rollweg (21) und mindestens einem äußeren Rollwerg (31), wobei der innere und der äußere Rollwerg radial mit Bezug aufeinander angeordnet sind, um Rollkörper (6) aufzunehmen, wobei der innere Teil (2) mit einer Dichtungswand (22) versehen ist, die axial gegen die Rollwege gedreht ist und sich radial nach außen erstreckt, wobei der äußere Ring (3) mit einer Abdeckungswand (32) versehen ist, die sich axial gegen die Dichtungswand (22) erstreckt und radial nach innen gedreht ist, um mit der Dichtungswand (22) eine Dichtungskammer (7) zu bilden, wobei die Dichtungskammer innen auf die Rollwege (21, 31) offen ist und eine äußere ringförmige Öffnung (10) aufweist, die einen Druckverlust darstellt, wobei sich die Dichtungswand (22) radial nach außen durch einen ringförmigen Rand (23) des inneren Teils (2) verlängert, wobei der ringförmige Rand radial nach außen gedreht ist, wobei die Abdeckungswand (32) eine axiale Abdeckung (e) mit dem äußeren ringförmigen Rand (23) aufweist, um die äußere ringförmige Öffnung (10) radial zu begrenzen, **dadurch gekennzeichnet, dass** der innere Teil (2) außerdem eine ringförmige Rinne (8) aufweist, die radial nach außen gedreht ist, wobei sich der äußere ringförmige Rand (23) zwischen der ringförmigen Rinne (8) des inneren Teils (2) und der Dichtungswand (22) befindet.

2. Lager nach Anspruch 1, **dadurch gekennzeichnet, dass** der Innendurchmesser (D8) der Rinne(8) kleiner als der Innendurchmesser (D1) des äußeren ringförmigen Rands (23) des inneren Teils (2) ist.

3. Lager nach einem der vorhergehenden Ansprüche, **dadurch gekennzeichnet, dass** der ringförmige Rand (23) eine erste (23a) und eine zweite (23b) gekrümmte Wand umfasst, die entlang einer Umkehrlinie (23c) aufeinander treffen, und dadurch, dass die erste gekrümmte Wand (23a) zwischen der Rinne (8) und der zweiten gekrümmten Wand (23b) angeordnet ist, und dadurch, dass die erste Wand (23a) eine Konkavität aufweist, die nach außen gedreht ist, und einen Krümmungsradius, der kleiner als der Krümmungsradius der zweiten Wand (23b) ist, deren Konkavität auf die Innenseite des Lagers gedreht ist.

4. Lager nach einem der vorhergehenden Ansprüche, **dadurch gekennzeichnet, dass** die Dichtungskammer eine Dichtung (4) aufnimmt.

5. Lager nach Anspruch 4, **dadurch gekennzeichnet, dass** die Dichtung (4) an den äußeren Ring (3) befestigt ist und mindestens eine Lippe in Kontakt mit der Dichtungswand (22) umfasst.

6. Lager nach einem der Ansprüche 4 oder 5, **dadurch gekennzeichnet, dass** die Dichtung eine dynamische Dichtung des Typs Mehrfachlippen (4) umfasst.

7. Lager nach einem der Ansprüche 4 bis 6, **dadurch gekennzeichnet, dass** die Dichtung eine ringförmige Bewehrung (5) umfasst.

8. Lager nach einem der Ansprüche 4 bis 7, **dadurch gekennzeichnet, dass** die Dichtungswand (22) auf der Ebene des axialen Kontakts mit der Dichtungsvorrichtung (4, 5) eine geschliffene Oberflächenbearbeitung aufweist.

9. Lager nach einem der vorhergehenden Ansprüche, **dadurch gekennzeichnet, dass** die Abdeckungswand (32) eine Fläche mit einer axialen Verlängerung (30) des äußeren Rings (3) darstellt, wobei die Verlängerung außerdem eine Rinne (9) aufweist, die radial nach außen gedreht ist, auf die Außenseite der Dichtungskammer (7).

10. Lager nach einem der vorhergehenden Ansprüche, **dadurch gekennzeichnet, dass** die axiale Abdeckung zwischen 0,05 und 1 mm liegt.

11. Lager nach einem der vorhergehenden Ansprüche, **dadurch gekennzeichnet, dass** der Rand (23) des inneren Teils (2) mindestens einen zylindrischen Abschnitt umfasst, der radial nach außen gedreht ist und einem zylindrischen Abschnitt der Abdeckungswand (32) gegenüber liegt, um die äußere ringförmige Öffnung (10) zu bilden.

12. Lager nach Anspruch 11, **dadurch gekennzeichnet, dass** der radiale Abstand zwischen dem zylindrischen Abschnitt des Randes und dem zylindrische Abschnitt der Abdeckungswand (32) zwischen 0,3 und 1 mm liegt.

13. Lager nach einem der vorhergehenden Ansprüche, **dadurch gekennzeichnet, dass** der innere Teil (2) ein drehender Teil ist, wobei der äußere Ring (3) fest ist.

14. Lageranordnung, umfassend eine Nabe und ein Rollenlager nach einem der vorhergehenden Ansprüche, **dadurch gekennzeichnet, dass** die Nabe den inneren Teil (2) des Rollenlagers darstellt.

15. Innerer Teil für ein Rollenlager nach einem der Ansprüche 1 bis 13, wobei der innere Teil mit einem Rollweg (21) versehen ist, um rollende Köper (6) aufzunehmen, wobei der innere Teil mit einer Dichtungswand (22) versehen ist, die axial gegen die Rollwege (21, 31) gedreht ist und sich radial nach außen erstreckt, wobei sich die Dichtungswand (22) radial durch einen ringförmigen Rand (23) nach außen verlängert, der radial nach außen gedreht ist, **dadurch gekennzeichnet, dass** der innere Teil (2) außerdem eine ringförmige Rinne (8) aufweist, die radial nach außen gedreht ist, wobei der ringförmige Rand (23) axial zwischen der ringförmigen Rinne (8) und der Dichtungswand (22) angeordnet ist.

16. Innerer Teil nach Anspruch 15, **dadurch gekennzeichnet, dass** die Dichtungswand (22) auf einem ringförmigen Abschnitt mindestens eine geschliffene Oberflächebearbeitung aufweist.

17. Innerer Teil nach Anspruch 15 oder Anspruch 16, **dadurch gekennzeichnet, dass** die Dichtungswand (22) einen ebenen ringförmigen Abschnitt aufweist.

18. Innerer Teil nach einem der Ansprüche 15 bis 17, **dadurch gekennzeichnet, dass** die ringförmige Wand (23) einen zylindrischen Abschnitt aufweist.
